# FASCICULE DE BREVET EUROPEEN

(11) **EP 2 274 161 B1**
(45) Date de publication et mention de la délivrance du brevet: **11.07.2012**
(21) Numéro de dépôt: 09731330.8
(22) Date de dépôt: 24.03.2009
(51) Int. Cl.: B32B 5/02, B32B 5/28, D04H 13/00, D04H 18/00, B60R 13/08, E04C 2/296, D04H 1/498, D04H 1/488, D04H 18/02, B32B 5/26

(54) **PANNEAU COMPOSITE A AME PERFOREE, DISPOSITIF ET PROCEDE POUR FABRIQUER UN TEL PANNEAU**
VERBUNDTAFEL MIT PERFORIERTEM KERN, VORRICHTUNG UND VERFAHREN ZUR HERSTELLUNG EINER DERARTIGEN TAFEL
PERFORATED-CORE COMPOSITE PANEL, DEVICE AND METHOD FOR MANUFACTURING SUCH A PANEL

(30) Priorité: 31.03.2008 FR 0852111
(43) Date de publication de la demande: 19.01.2011
(73) Titulaire: Societe Internationale Pour Le Commerce Et L'Industrie, 13220 Chateauneuf-les-Martigues (FR)
(72) Inventeur: LE ROY, Guy, F-75003 Paris (FR); ROMIGOU, Gilles, F-29720 Ploneour Lanvern (FR)
(74) Mandataire: Pontet, Bernard
(86) Numéro de dépôt international: PCT/FR2009/050504
(87) Numéro de publication internationale: WO 2009/125124

(56) Documents cités:
- EP-A- 0 822 062
- EP-A- 1 081 305
- DE-U1- 29 710 639
- FR-A- 2 678 547
- FR-A- 2 881 442
- US-A1- 2006 141 884

## Description

La présente invention concerne un panneau composite.

La présente invention concerne également un dispositif pour fabriquer un tel panneau.

La présente invention concerne encore un procédé pour réaliser le panneau composite.

Les panneaux composites dits « sandwich », bien connus, comprennent deux peaux résistantes à divers efforts, placées de part et d'autre d'une âme dont au moins les principaux éléments sont des solides géométriques préformés, typiquement en mousse ou en feutre. Les peaux comprennent une armature fibreuse imprégnée d'une résine qui confère à ces peaux une certaine rigidité intrinsèque ainsi qu'une liaison avec l'âme.

Ces panneaux sont très répandus dans des applications où il faut réaliser des parois rigides, légères, durables, résistantes aux chocs et/ou etc.

L'âme a notamment pour fonction de maintenir une distance sensiblement fixe entre les deux peaux. En conséquence, le panneau ne peut fléchir que dans la mesure où la peau radialement extérieure (relativement à l'axe de flexion) est capable de s'étirer, et la peau radialement intérieure capable de se contracter. Comme les peaux ont une faible aptitude à s'étirer et à se contracter, le panneau est rigide en flexion.

Toutefois, les panneaux connus sont soumis au risque dit de « délamination » consistant en ce que, notamment sous un effort de flexion, l'une au moins des peaux se désolidarise de l'âme. Dans ce cas, les caractéristiques mécaniques du panneau se dégradent de manière inacceptable.

Pour remédier à cette difficulté, on a proposé de créer une liaison mécanique entre chaque peau et l'âme. On a par exemple proposé de réaliser une couture entre l'armature fibreuse de la peau et l'âme, avant l'étape d'imprégnation des peaux par la résine. De tels procédés ont une certaine efficacité, mais ils nécessitent des opérations supplémentaires avec des machines complexes et relativement lentes qui accroissent considérablement l'investissement industriel et le temps nécessaire pour la fabrication d'un panneau. Les panneaux ainsi renforcés sont donc coûteux.

On connaît en outre au travers du document FR 2 881 442 du demandeur, un panneau composite comprenant deux peaux fibreuses, et une âme placée dans le volume intercalaire entre les peaux et reliée à celles-ci par une résine solidifiée, dans lequel des fibres de liaison originaires des peaux ont été enfoncées perpendiculairement dans le volume intercalaire entre les peaux, les fibres enfoncées étant regroupées en touffes situées en des sites où se trouve également de la résine. Sans remettre en question l'intérêt d'un tel panneau, il a été constaté que la structure et le procédé de fabrication d'un tel panneau peuvent encore être modifiés, notamment dans un but de simplification et de moindre coût, sans pour autant dégrader considérablement les propriétés mécaniques du panneau, et notamment sa bonne tenue vis-à-vis des risques de délamination.

Le but de la présente invention est ainsi de proposer un panneau composite très économique et offrant de manière fiable des caractéristiques mécaniques améliorées.

A cet effet, l'invention a pour objet un panneau composite, comprenant deux nappes fibreuses, et une âme placée dans le volume intercalaire entre les nappes et reliée à celles-ci par une matière liante solidifiée, caractérisé en ce que des évidements sont conformés dans l'âme, par au moins l'une de ses faces, pour recevoir exclusivement de la matière liante solidifiée.

Les évidements sont uniquement destinés à recevoir de la matière liante. La matière liante solidifiée se comporte comme un enracinement de chaque peau dans l'âme, la peau étant constituée d'une nappe fibreuse imprégnée de matière liante. Cet enracinement s'oppose efficacement au délaminage du panneau.

Des procédés industriels bien connus dans leur principe permettent, selon l'invention, de réaliser des évidements avec des cadences qui ne provoquent pratiquement pas de ralentissement de la chaîne de fabrication du panneau composite. Un tel procédé industriel est typiquement l'aiguilletage.

En outre, l'invention permet de renforcer à volonté la liaison entre l'âme et chaque peau. Il suffit de choisir une densité d'évidements, typiquement une densité d'aiguilletage (nombre de coups par unité de surface de panneau) adaptée aux résultats recherchés. La densité peut être uniforme ou au contraire différente pour différentes zones du panneau, en fonction des sollicitations attendues en service pour chaque zone et/ou en fonction de particularités locales du panneau, par exemple la présence d'inserts ou de cavités dans certaines zones de l'âme.

La matière liante peut être une résine, éventuellement une résine moussée, un liant, etc. dont on imprègne le panneau après la conformation des évidements et le processus de recouvrement de chaque face de l'âme par les peaux fibreuses. La matière liante se solidifie lors de la polymérisation et assure une consolidation des peaux ainsi qu'une stratification du panneau.

La matière liante imprègne les nappes de fibres et est reçue dans au moins une partie des évidements par injection et/ou infusion.

Au moins une partie des évidements recevant de la matière liante est formée dans au moins un constituant de l'âme, en particulier par aiguilletage, perforation, ou poinçonnement, de sorte que chaque évidement présente un profil allongé selon un axe et une longueur de pénétration.

Il est possible de ne former des évidements que sur une partie de l'épaisseur du volume intercalaire. Ceci est avantageux pour des panneaux de forte épaisseur. On peut ainsi mettre en oeuvre l'invention sans avoir besoin d'une course d'aiguilletage aussi grande que l'épaisseur du panneau. Ceci est également avantageux pour implanter de la matière liante dans des évidements de l'âme qui ne s'étendent que sur une partie de l'épaisseur de l'âme. Mais dans bien des applications, on préfère que la matière liante forme des ponts reliant les deux nappes ensemble. Pour cela, on peut faire en sorte que la matière liante imprégnant une nappe rejoigne et s'implante dans l'armature fibreuse de l'autre nappe pour réaliser entre les deux nappes une liaison. Dans ce cas, des évidements sont conformés par chaque face de l'âme de manière à être mis en communication l'un avec l'autre dans une zone intérieure de celle-ci. Egalement, la matière liante introduite dans un évidement peut rejoindre la matière liante introduite dans l'autre évidement et se solidariser avec cette dernière lors de la solidification. La matière liante, en migrant par les évidements, assure une liaison entre les peaux fibreuses extérieures.

Au moins une partie des évidements, nommés premiers évidements, conformés par une face de l'âme sont associés deux à deux à des évidements correspondants, nommés seconds évidements, conformés par l'autre face de l'âme, de telle sorte que les évidements d'un même couple sont sensiblement parallèles et ont un entraxe de 0 à 0,7 mm.

La somme des longueurs de pénétration des évidements d'un même couple est supérieure à l'épaisseur locale de l'âme, chacune des longueurs de pénétration des premiers et des seconds évidements d'un même couple étant inférieure à l'épaisseur locale de l'âme.

Au moins une partie des évidements comporte un axe de pénétration sensiblement perpendiculaire au panneau.

Au moins une partie des évidements comporte un axe de pénétration incliné par rapport au panneau.

Les évidements ont un diamètre compris généralement entre 0,5 mm et 2,67 mm. Ces diamètres dépendant des jauges d'aiguilles dont la limite est de 2,67 mm en aiguilletage.

De préférence, les évidements se trouvent le long de motifs géométriques tels que rangées, carreaux, points en quinconce. La nature de ces motifs, ainsi que la dimension du motif élémentaire, permettent de renforcer plus ou moins certaines zones du panneau, et/ou le panneau tout entier.

L'une au moins des faces de l'âme peut être conformée de façon non-plane.

Il est encore possible de réaliser un panneau comportant au moins deux âmes superposées avec éventuellement une nappe intérieure, en particulier fibreuse, intercalée entre les deux âmes. Dans ce cas les évidements peuvent être conformés dans chacune des deux âmes, de manière que les matières liantes traversant chacune de ces deux âmes soient situées sensiblement dans le même axe, ou soient décalées l'une par rapport à l'autre.

L'invention a encore pour objet un dispositif pour fabriquer un panneau comprenant des moyens d'acheminement d'une âme comprenant au moins un élément préformé, jusqu'à une unité d'aiguilletage, au moins une unité d'aiguilletage pour conformer des évidements sur l'âme par au moins l'une de ses faces.

L'invention a encore pour objet un procédé pour réaliser un panneau composite ayant les caractéristiques vues précédemment, dans lequel, par aiguilletage, on conforme des évidements dans l'âme directement par au moins l'une de ses faces.

Avant l'aiguilletage, il est également possible de conformer au moins une face de l'âme, en particulier par fraisage, découpage. La conformation peut consister soit à donner à cette face de l'âme la forme prévue pour la face correspondante du produit fini, soit à préparer, par exemple sous forme de sillon ou rainure, des zones de déformation qui permettront ensuite, par moulage lors de l'imprégnation, de donner au panneau une forme générale non plane.

Dans le procédé selon l'invention, on conforme des premiers évidements par une face de l'âme et des seconds évidements par l'autre face de l'âme, les premiers et seconds évidements ayant des profils allongés selon des axes sensiblement parallèles, et étant associés deux à deux de sorte que les évidements d'un même couple ont un entraxe de 0 à 0,7 mm.

Les évidements d'un même couple sont conformés par des frappes d'aiguilles d'un couple d'aiguilles correspondant, dont la pénétration dans l'âme est telle que la somme des longueurs de pénétration des aiguilles d'un même couple est supérieure à l'épaisseur de l'âme, chacune des longueurs de pénétration des aiguilles d'un même couple étant inférieure à l'épaisseur locale de l'âme.

Les frappes d'aiguilles d'un même couple peuvent être sensiblement simultanées ou non simultanées.

On notera que les aiguilles d'une planche, situées d'un même côté du panneau doivent de préférence ne pas pénétrer en totalité l'épaisseur de l'âme car l'enfoncement provoque le refoulement de la matière poussée par les aiguilles. La quantité de matière, tel un bouchon, ferait éclater la surface opposée en produisant un petit cratère, ce qui engendrerait un défaut de surface du produit fini et une augmentation de volume de la matière liante nécessaire, également nuisible au produit fini. La pénétration de deux planches d'aiguilles de part et d'autre de l'âme qui pénètre simultanément dans l'âme par ses deux faces opposées apporte les avantages suivants :
- un équilibrage des efforts de pénétration, certaines âmes de densité élevée (plus de 100 kg/m3), exigent des efforts de l'ordre de quelques kilos par aiguille. Cet effort nécessite des aiguilles résistantes à la flexion d'où une section adaptée.
- la nécessité d'utiliser deux planches à aiguilles évite des efforts en porte-à-faux sur l'outillage.
- la réduction de pénétration des aiguilles, pour éviter la création de cratères lors de la sortie du bouchon nécessite un dégagement de l'évidement pour faciliter le passage de la matière liante de part et d'autre de l'âme. Ce passage est réalisé par des pénétrations d'aiguilles qui ne sont pas face à face et ne pénètrent que sur une distance de 70 à 90% de l'épaisseur de l'âme. A leur position, sur les planches respectives, est combinée une avance de l'âme selon un pas à environ 0,1 mm de précision entre les planches d'aiguilles, ce qui permet de réaliser deux évidements par les faces opposées de l'âme, qui sont décalés avec un entre axe de quelques dixièmes de millimètres, typiquement de 0 à 0,7 mm comme vu précédemment.

Les frappes d'aiguilles peuvent être réalisées selon une direction sensiblement perpendiculaire ou dans une variante, selon une direction inclinée par rapport à celui-ci.

On utilise une disposition d'aiguilles et/ou un pas d'avance entre frappes successives des aiguilles de façon à réaliser un motif d'évidements recevant la matière liante.

Après aiguilletage on dispose l'âme entre deux nappes fibreuses, notamment dans un moule, afin de recouvrir les deux faces de l'âme desdites nappes et on imprègne les nappes de matière liante afin de former les peaux extérieures du panneau.

On forme entre les deux peaux des ponts de matière liante qui relient les deux peaux.

D'autres particularités et avantages de l'invention ressortiront encore de la description ci-après, relative à des exemples non limitatifs, et des dessins annexés, dans lesquels :
- la figure 1 est une vue en perspective, avec arrachement, d'un panneau selon l'invention ;
- la figure 2 illustre en coupe, à échelle agrandie, un détail du panneau de la figure 1, en deux évidements recevant de la matière liante ;
- la figure 3 est une vue partielle en coupe longitudinale du panneau de la figure 1 ;
- la figure 4 est une vue en coupe longitudinale d'un outillage pour un dispositif de fabrication d'un panneau selon l'invention ;
- la figure 5 est une vue de dessus d'un panneau selon l'invention, illustrant différents motifs d'évidements ;
- la figure 6 est une vue des planches à aiguilles permettant de conformer des évidements dans un panneau selon l'invention, illustrant des répartitions d'aiguilles en action pour réaliser un motif en quinconce selon la figure 5 ; et
- la figure 7 est une vue partielle de dessus d'un outillage selon la figure 3, en cours de production.

Sous le terme « panneau », on entend suivant l'invention un matériau composite ayant une dimension d'épaisseur relativement faible par rapport à deux autres dimensions rectilignes ou curvilignes telles qu'une longueur et une largeur. En particulier, le mot « panneau » ne limite pas l'objet visé à un objet plein, ni à un objet d'épaisseur constante.

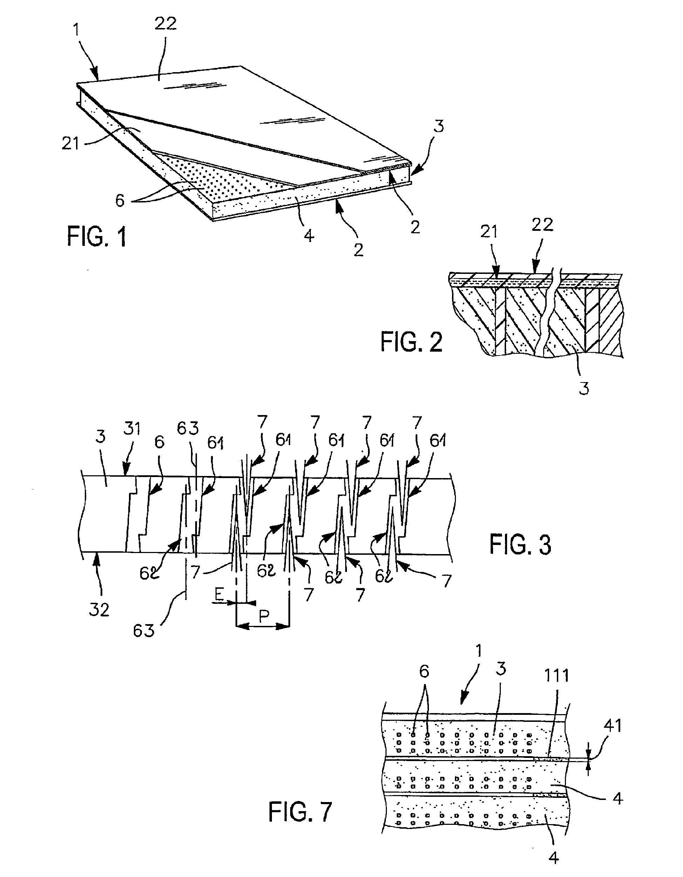

Dans l'exemple représenté à la figure 1, le panneau 1 comprend deux peaux 2 s'étendant dans des plans parallèles et définissant entre elles un volume intercalaire occupé par une âme 3. Dans l'exemple représenté, l'âme 3 est constituée d'une plaque de mousse 4. Les peaux 2 sont rapportées sur l'âme 3 lors du moulage pour former un sandwich.

Chaque peau 2 comprend une nappe de fibres 21, qui est un tissé bi ou multidirectionnels en matière inorganique ou végétale. La nappe est utilisée en renfort de surface. La nappe 21 est noyée dans une matière liante telle qu'une résine 22 de manière à absorber une quantité de cette dernière. A la figure 1, la résine 22 est schématiquement représentée superposée à la nappe de fibres 21. En pratique, comme le montre la figure 2, la résine 22 imprègne les fibres 21 et réalise ainsi une solidification de l'ensemble fibre-résine ainsi qu'une solidarisation de cet ensemble avec la surface de l'âme 3.

Selon l'invention, préalablement au recouvrement des faces externes de l'âme 3 par les nappes de fibres 21, des évidements 6 sont conformés dans l'âme 3 par ses faces externes. Ces évidements 6 sont réalisés dans au moins un constituant de l'âme 3 telle qu'une plaque 4 évoquée ci-dessus. Les évidements 6 sont exclusivement destinés à recevoir de la matière liante à une étape ultérieure du procédé.

En référence à la figure 3, les évidements 6 sont formés par aiguilletage, perforation ou poinçonnement, à l'aide de planches 70 à aiguilles 7 placées de part et d'autre de l'âme 3 qui viennent perforer l'âme par chacune de ses faces 31, 32. Les évidements 6 ont un profil allongé selon un axe longitudinal 63, qui s'étend sur une certaine longueur L de pénétration en direction de l'intérieur de l'âme 3. Dans ce contexte d'aiguilletage, les termes « perforation » ou « microperforation » peuvent également être utilisés à la place du terme « évidement » par l'homme de l'art.

Selon l'invention, une partie des évidements, que l'on nommera premiers évidements 61 dans le sens où ils sont conformés par une première face 31 de l'âme 3 sont associés deux à deux à des seconds évidements 62, conformés par la seconde face 32 de l'âme 3, opposée à la première, de manière à former des couples d'évidements.

Selon l'invention, les premiers 61 et seconds évidements 62 d'un même couple sont sensiblement parallèles et ont des axes décalés d'un entraxe E de l'ordre de 0 à 0,7 mm. Les aiguilles 7 générant ces évidements sont engagées simultanément dans l'âme 3, par chacune de ses faces.

Avantageusement, la somme des longueurs L de pénétration (au sens géométrique) des évidements 61, 62 d'un même couple est supérieure à l'épaisseur locale. De plus, chacune des longueurs L de pénétration des premiers 61 et seconds évidements 62 d'un même couple est inférieure à l'épaisseur locale de l'âme 3. De cette façon, les premiers 61 et seconds 62 évidements ont une zone de chevauchement dans la direction de l'épaisseur de l'âme 3. Les évidements ont un diamètre pouvant aller de 0,5 environ à la jauge maximale utilisable en aiguilletage, soit une jauge de taille 2,67 mm si besoin. Les évidements d'un même couple se rejoignent de manière à créer un conduit débouchant sur les deux faces de l'âme 3. Ainsi, les évidements 61 et 62 forment des réceptacles pour la matière liante 22 lorsque les peaux 2 en sont ultérieurement imprégnées. La matière liante 22 forme de ce fait des ponts reliant les deux peaux 2.

Dans une variante de réalisation de l'invention, illustrée à la figure 3, les axes de pénétration 63 des évidements 6 sont sensiblement perpendiculaires au panneau 1, c'est-à-dire aux plans des faces extérieures 31, 32 de l'âme 3. La matière liante 22 introduite dans ces évidements prend donc une forme longitudinale perpendiculaire au plan du panneau 1.

Dans une autre variante de réalisation, non représentée, les évidements 6 ont des axes de pénétration inclinés par rapport au panneau 1, de manière à orienter la matière liante 22 selon cette même direction.

On notera que les évidements 6 peuvent être regroupés en évidements ponctuels ou linéaires. Une disposition en quinconce entre différents évidements ponctuels ou rangées d'évidements peut être prévue. D'une manière générale, les motifs et la densité choisie peuvent être adaptés à volonté dans chaque panneau, ainsi que, dans un panneau déterminé, dans chaque région donnée du panneau. La densité peut varier entre environ 40 et 500 évidements / dm². On peut créer des zones longitudinales différenciées. On peut même envisager de créer des zones transversales différenciées, par exemple en modulant la vitesse d'avance d'un panneau à travers le dispositif de fabrication qui sera décrit plus loin. Pour la plage de densité indiquée précédemment, la distance P entre deux évidements 6 successifs dans la direction du déplacement du panneau 1 est de l'ordre de 4 à 25 mm environ, et correspond au pas d'avance, un multiple ou une division du pas d'avance par cycle de pénétration.

Lorsque les évidements 6 ont été formés dans l'âme 3 selon l'agencement et la densité souhaités, celle-ci est recouverte de deux peaux fibreuses 2 accolées sur chacune de ces deux faces, lors d'une opération de moulage, afin de former un sandwich.

Ces peaux 2 sont alors imprégnées avec la matière liante 22. L'imprégnation a pour effet de faire pénétrer la matière liante dans l'âme 3 le long des évidements 6. Cette pénétration s'effectue non seulement dans les évidements 6 mais également dans toutes rainures, gorges, intervalles, puits etc. éventuellement déjà présents à la surface de l'âme.

La matière liante 22 a pour effet de fixer intimement les matériaux avoisinants, à savoir les parois intérieures de l'âme 3 et les régions des peaux 2 surplombant des évidements 6. On réalise ainsi un accrochage entre l'âme 3 et chaque peau 2 et il en résulte une résistance particulièrement élevée du panneau à l'encontre de la délamination. En outre, dans le cas d'évidements traversants et de manière liante 22 formant des ponts entre les deux peaux 2, il est également réalisé un accrochage des deux peaux 2 l'une à l'autre.

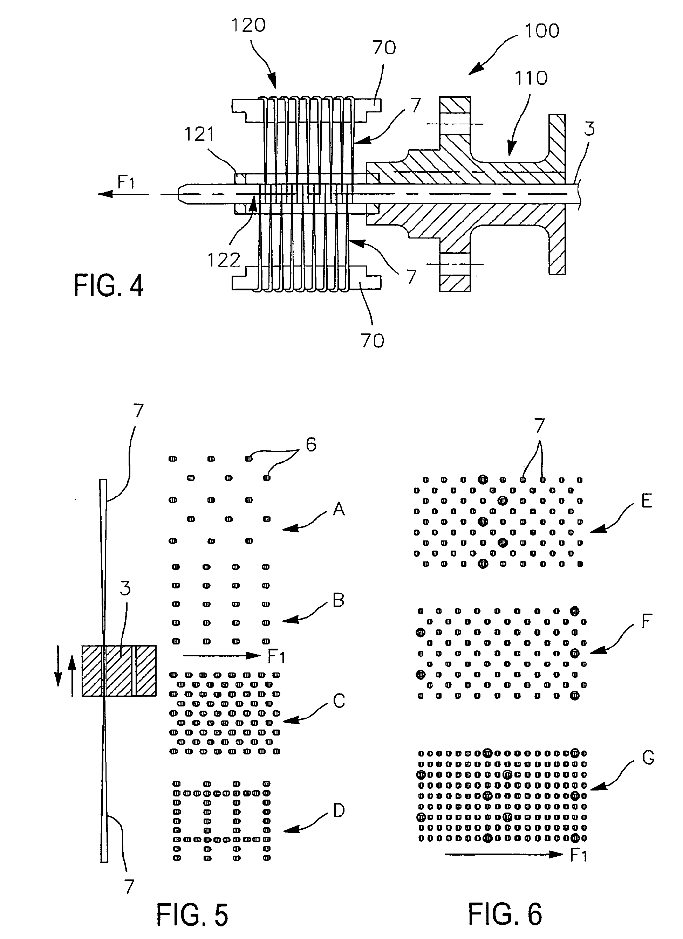

On va maintenant décrire en référence à la figure 4 un outillage 100 utilisable dans un dispositif pour la fabrication d'un panneau 1 conforme à l'invention. L'outillage 100 comprend un guide 110 pour l'acheminement de l'âme 3 dans un mouvement d'avance vers la gauche de la figure 4 (flèche F1).

L'outillage de fabrication 100 représenté à la figure 4 comprend en outre un outillage d'aiguilletage 120 destiné à conformer des évidements 6 dans l'âme 3 en perforant cette dernière par chacune de ces deux faces. L'outillage d'aiguilletage 120 comprend à son tour :
- deux débourreurs 121 qui définissent entre eux un trajet d'aiguilletage 122 constituant la continuation du trajet à travers le guide 110;
- deux planches à aiguilles 70 situées de part et d'autre, respectivement, du trajet d'aiguilletage 122, et portant des aiguilles 7 orientées, dans l'exemple illustré, perpendiculairement au plan du trajet 122 ; les pointes des aiguilles 7 sont capables de pénétrer dans le trajet d'aiguilletage 122 à travers des fentes formées entre des lamelles (non représentées) composant les débourreurs 121 dans la zone où se trouvent les aiguilles 7.

Lorsque l'outillage 100 est installé dans une machine de production, chaque planche à aiguilles 70 est fixée à un moyen d'actionnement en un mouvement de va-et-vient perpendiculaire au plan du trajet d'aiguilletage 122 de sorte que les pointes des aiguilles 7 pénètrent dans le trajet d'aiguilletage 122 et en ressortent. L'avance de l'âme 3 selon la flèche F1 est synchronisée avec le mouvement des aiguilles 7 de sorte que l'âme avance lorsque les aiguilles 7 sont dégagées du trajet d'aiguilletage 122 et l'avance de l'âme est stoppée lorsque les aiguilles 7 sont saillantes dans le trajet d'aiguilletage 122. Dans l'exemple représenté, les aiguilles 7 situées d'un côté du trajet d'aiguilletage 122 sont décalées par rapport aux aiguilles 7 situées de l'autre côté, ce qui permet de synchroniser les deux planches à aiguilles 70 de façon que toutes les aiguilles 7 soient simultanément engagées dans le trajet d'aiguilletage 122 et en soient simultanément dégagées pour permettre l'avance de l'âme 3.

A la figure 7, le panneau 1 est représenté vu de dessus, en cours de production, à la sortie du guide 110 et au droit de l'outillage d'aiguilletage 120. L'âme 3 comporte des évidements 6 venant d'être conformés. L'âme 3 du panneau 1 en cours de production peut être composée de plaques de mousse 4 relativement étroites, en forme de bandes, séparées par des parois de guidage 111 qui maintiennent un certain écartement 41 entre les plaques 4. Les parois de guidage 111 sont fixées dans le guide d'introduction 110 et se terminent juste en amont des aiguilles 7.

D'une manière générale, la disposition des aiguilles 7 sur les planches 70, la cadence de frappe des aiguilles 7 et le pas d'avance du produit selon la flèche F1 sont choisis en combinaison pour obtenir le motif d'évidements 6 désiré.

On a représenté à la figure 5 différents motifs d'évidements qui peuvent être conformés sur une âme 3 d'un panneau 1 selon l'invention. La flèche F1 montre la direction de l'avance séquentielle de l'âme entre les planches à aiguilles produite lorsque les aiguilles sont hors de l'âme 3. Le motif A est un agencement des évidements 6 en quinconce. Le motif B est un agencement des évidements en rangées transversales, par rapport à la direction d'avance de l'âme 3. Le motif C est également un agencement en quinconce des évidements 6 avec une densité supérieure à celle du motif A. Le motif D est un agencement en quadrillage pourvu de rangées longitudinales et transversales par rapport à la direction d'avance de l'âme 3.

On a également représenté à la figure 6, à titre d'exemple, la disposition des aiguilles 7 sur chaque planche supérieure et inférieure 70, respectivement représentées en E et F, en entourant par des cercles en trait épais celles des aiguilles qui pénètrent dans l'âme 3 pour former le motif en quinconce A de la figure 5. La superposition des emplacements des aiguilles des planches supérieure et inférieure 70 est représentée en G. La flèche F1 représente toujours la direction de l'avance séquentielle de l'âme entre les planches à aiguilles, lorsque les aiguilles sont hors de l'âme 3. La pénétration des aiguilles 7 des planches supérieure et inférieure 70 étant simultanée, on se rend compte que la répartition des aiguilles implantées des deux planches assure un équilibrage des efforts, évitant tout effet de levier sur l'âme 3. L'âme 3 est uniquement soumise à des efforts de compression dans la direction perpendiculaire à son plan.

Après la sortie de l'outillage d'aiguilletage, le produit semi-fini est découpé en panneaux élémentaires, par des coupes transversales avec un outillage de coupe connu non représenté. Dans un poste de moulage, les panneaux découpés sont introduits dans un moule où sont placées les nappes fibreuses, et où est injectée la matière liante telle que résine. Cette étape classique en soi est également non représentée, car connue dans la fabrication des panneaux composites dits «sandwich ». Le moule peut être plan pour réaliser un panneau plan, ou au contraire non plan pour simultanément déformer le produit semi-fini plan en un panneau fini ayant une forme non plane désirée.

Les nappes de fibres 21 peuvent être issues de bobines de mat préconsolidé. Ces nappes de fibres peuvent également être issues de filaments continus découpés en des fibres coupées et déposées en éparpillement sur l'âme avant son introduction dans le moule.

Bien entendu, l'invention n'est pas limitée aux exemples décrits et représentés.

L'âme peut elle-même être, au moins en partie, fibreuse.

Les dimensions d'un panneau selon l'invention peuvent être choisies très librement en fonction des domaines d'application qui peuvent être : garnitures intérieures pour l'automobile, panneaux de carrosserie pour véhicules utilitaires, pièces de carrosserie ou plates-formes de châssis pour l'automobile, panneaux pour le bâtiment, pour l'ameublement, panneaux isolants, panneaux de toiture, panneaux pour les garnitures intérieures de véhicule ferroviaires, d'avions ou de bateaux, vantaux de porte, etc. Des épaisseurs de 10 mm à 80 mm sont, non-limitativement, réalisables. Les matières plastiques utilisées sont, au choix, des thermoplastiques ou des thermodurcissables. La largeur des panneaux, relativement à la direction F1, peut être adapté au besoin commercial, sans que le principe en soit modifié.

Dans tous les exemples représentés, les composants de l'âme sont de forme stable à leur entrée dans le dispositif de fabrication.

Toutefois, l'âme peut présenter une certaine souplesse ou flexibilité, qui permet ensuite un moulage avec une forme complexe ou une déformation importante, par exemple pour réaliser des pièces pour la construction navale, l'automobile ou des éléments de forme semblablement complexe.

En outre, on a illustré un panneau ayant une âme 3 pourvue de faces extérieures sensiblement planes et parallèles. Sans sortir du cadre de l'invention, les faces de l'âme peuvent être non planes et peuvent par exemple avoir une forme générale ondulée, convexe, concave etc.

Par ailleurs, le panneau peut comprendre au moins deux âmes élémentaires superposées, séparées d'une peau intérieure.

## Revendications

1. Panneau composite (1), comprenant deux nappes fibreuses (21), et une âme (3) placée dans le volume intercalaire entre les nappes (21) et reliée à celles-ci par une matière liante solidifiée (22), **caractérisé en ce que** des évidements (6) ponctuels sont conformés dans l'âme (3), par au moins l'une de ses faces (31 ; 32), et reçoivent exclusivement de la matière liante (22).

2. Panneau selon la revendications 1, **caractérisé en ce que** la matière liante (22) imprègne les nappes (21) et est reçue dans au moins une partie des évidements (6) par injection et/ou infusion.

3. Panneau selon la revendication 1 ou 2, **caractérisé en ce qu'**au moins une partie des évidements (6) recevant de la matière liante (22) est formée dans au moins un constituant de l'âme (3), en particulier par aiguilletage, perforation, ou poinçonnement, de sorte que chaque évidement (6) présente un profil allongé selon un axe (63) et une longueur (L) de pénétration.

4. Panneau selon l'une des revendications 1 à 3, **caractérisé en ce que** de la matière liante solidifiée (22) forme des ponts reliant les deux nappes (21) ensemble.

5. Panneau selon l'une des revendications 1 à 4, **caractérisé en ce qu'**au moins une partie des évidements, nommés premiers évidements (61), conformés par une face (31) de l'âme (3) sont associés deux à deux à des évidements correspondants, nommés seconds évidements (62), conformés par l'autre face (32) de l'âme (3), de telle sorte que les évidements d'un même couple sont sensiblement parallèles et ont un entraxe de 0 à 0,7 mm.

6. Panneau selon la revendication 5, **caractérisé en ce que** la somme des longueurs (L) de pénétration des évidements (6) d'un même couple est supérieure à l'épaisseur locale de l'âme (3), chacune des longueurs de pénétration des premiers (61) et des seconds (62) évidements d'un même couple étant inférieure à l'épaisseur locale de l'âme (3).

7. Panneau selon l'une des revendications 4 à 6, **caractérisé en ce qu'**au moins une partie des évidements (6) comporte un axe (63) de pénétration sensiblement perpendiculaire au panneau (1).

8. Panneau selon l'une des revendications 4 à 6, **caractérisé en ce qu'**au moins une partie des évidements comporte un axe de pénétration incliné par rapport au panneau (1).

9. Panneau selon l'une des revendications 1 à 6, **caractérisé en ce que** les évidements (6) ont un diamètre compris entre 0,5 mm et 2,67 mm.

10. Panneau selon l'une des revendications 1 à 9, **caractérisé en ce que** les évidements (6) recevant la matière liante solidifiée (7) se trouvent le long de motifs géométriques tels que rangées, carreaux, points en quinconce.

11. Panneau selon l'une des revendications 1 à 10, **caractérisé en ce que** l'une au moins (31 ; 32) des faces de l'âme (3) est conformée de façon non-plane.

12. Panneau selon l'une des revendications 1 à 11, **caractérisé en ce qu'**il comprend au moins deux âmes élémentaires superposées, en particulier avec interposition d'une nappe intérieure.

13. Dispositif pour fabriquer un panneau selon l'une des revendications 1 à 12, **caractérisé en ce qu'**il comprend :
- des moyens d'acheminement (110) d'une âme (3) comprenant au moins un élément (4) préformé, jusqu'à une unité d'aiguilletage (120),
- au moins une unité d'aiguilletage (120) pour conformer des évidements (6) sur l'âme (3) par au moins l'une de ses faces (31 ; 32), préalablement au recouvrement des faces externes de l'âme (3) par des nappes de fibres.

14. Procédé pour réaliser un panneau composite selon l'une des revendications 1 à 12, **caractérisé en ce que**, par aiguilletage, on conforme des évidements (6) dans l'âme (3) directement par au moins l'une de ses faces (31 ; 32).

15. Procédé selon la revendication 14, **caractérisé en ce qu'**on conforme des premiers évidements (61) par une face (31) de l'âme (3) et des seconds évidements (62) par l'autre face (32) de l'âme (3), les premiers (61) et seconds (62) évidements ayant des profils allongés selon des axes sensiblement parallèles, et étant associés deux à deux de sorte que les évidements (6) d'un même couple ont un entraxe de 0 à 0,7 mm.

16. Procédé selon la revendication 15, **caractérisé en ce que** les évidements (6) d'un même couple sont conformés par des frappes d'aiguilles (7) d'un couple correspondant, dont la pénétration dans l'âme (3) est telle que la somme des longueurs (L) de pénétration des aiguilles (7) d'un même couple est supérieure à l'épaisseur de l'âme (3), chacune des longueurs (L) de pénétration des aiguilles (7) d'un même couple étant inférieure à l'épaisseur locale de l'âme (3).

17. Procédé selon la revendication 15 ou 16, **caractérisé en ce que** les frappes d'aiguilles (7) d'un même couple sont sensiblement simultanées.

18. Procédé selon la revendication 15 ou 16, **caractérisé en ce que** les frappes d'aiguilles (7) d'un même couple ne sont pas simultanées.

19. Procédé selon l'une des revendications 15 à 18, **caractérisé en ce que** les frappes d'aiguilles (7) sont réalisées selon une direction sensiblement perpendiculaire au panneau (1).

20. Procédé selon l'une des revendications 15 à 19, **caractérisé en ce que** les frappes d'aiguilles (7) sont réalisées selon une direction inclinée par rapport au panneau (1).

21. Procédé selon l'une des revendications 15 à 20, **caractérisé en ce qu'**on utilise une disposition d'aiguilles (7) et/ou un pas d'avance entre frappes successives des aiguilles (7) de façon à réaliser un motif d'évidements (6) recevant de la matière liante (22).

22. Procédé selon l'une des revendications 15 à 21, **caractérisé en ce qu'**après aiguilletage on dispose l'âme (3) entre deux nappes fibreuses (21), notamment dans un moule, et on imprègne les nappes (21) de matière liante (22).

23. Procédé selon la revendication 22, **caractérisé en ce qu'**on forme entre les deux nappes (21) des ponts de matière liante (22) qui relient les deux nappes (21).

## Claims

1. Composite panel (1), comprising two fibrous layers (21), and a web (3) placed in the inner volume between the layers (21) and bonded to the latter by a solidified bonding material (22), **characterized in that** individual recesses (6) are formed in the web (3), through at least the one of its faces (31; 32), and receive exclusively solidified bonding material (22).

2. Panel according to claim 1, **characterized in that** the bonding material (22) impregnates the layers (21) and is received in at least one portion of the recesses (6) by injection and/or infusion.

3. Panel according to claim 1 or 2, **characterized in that** at least one portion of the recesses (6) receiving the bonding material (22) is formed in at least one constituent of the web (3), in particular by needlepunching, perforation, or punching, so that each recess (6) has a profile extending along an axis (63) and a penetration length (L).

4. Panel according to one of claims 1 to 3, **characterized in that** solidified bonding material (22) forms bridges linking the two layers (21) together.

5. Panel according to one of claims 1 to 4, **characterized in that** at least one portion of the recesses, called first recesses (61), formed through a face (31) of the web (3) are associated in pairs with corresponding recesses, called second recesses (62), formed through the other face (32) of the web (3), so that the recesses in the same pair are substantially parallel and have a centre distance of 0 to 0.7 mm.

6. Panel according to claim 5, **characterized in that** the sum of the penetration lengths (L) of the recesses (6) in the same pair is greater than the local thickness of the web (3), each of the penetration lengths of the first (61) and second (62) recesses in the same pair being less than the local thickness of the web (3).

7. Panel according to one of claims 4 to 6, **characterized in that** at least one portion of the recesses (6) comprises an axis (63) of penetration substantially perpendicular to the panel (1).

8. Panel according to one of claims 4 to 6, **characterized in that** at least one portion of the recesses comprises an axis of penetration inclined in relation to the panel (1).

9. Panel according to one of claims 1 to 6, **characterized in that** the recesses (6) have a diameter comprised between 0.5 mm and 2.67 mm.

10. Panel according to one of claims 1 to 9, **characterized in that** the recesses (6) receiving the solidified bonding material (7) are located along geometrical patterns such as rows, squares and staggered points.

11. Panel according to one of claims 1 to 10, **characterized in that** at least one (31; 32) of the faces of the web (3) is formed in a non-flat manner.

12. Panel according to one of claims 1 to 11, **characterized in that** it comprises at least two superimposed web units, in particular with an inner layer interposed.

13. Device for manufacturing a panel according to one of claims 1 to 12, **characterized in that** it comprises:
- means of conveying (110) a web (3) comprising at least one preformed element (4) to a needlepunching unit (120),
- at least one needlepunching unit (120) for forming recesses (6) on the web (3) through at least one of its faces (31; 32), before the outer faces of the web 3 are covered by fibre layers.

14. Method of producing a composite panel according to one of claims 1 to 12, **characterized in that** recesses (6) are formed by needlepunching directly in the web (3) through at least one of its faces (31; 32).

15. Method according to claim 14, **characterized in that** first recesses (61) are formed through a face (31) of the web (3) and second recesses (62) through the other face (32) of the web (3), the first (61) and second (62) recesses having profiles extending along substantially parallel axes, and being associated in pairs so that the recesses (6) in the same pair have a centre distance of 0 to 0.7 mm.

16. Method according to claim 15, **characterized in that** the recesses (6) in the same pair are formed by needle strikes (7) of a corresponding pair, the penetration into the web (3) of which is such that the sum of the penetration lengths (L) of the needles (7) in the same pair is greater than the thickness of the web (3), each of the penetration lengths (L) of the needles (7) in the same pair being less than the local thickness of the web (3).

17. Method according to claim 15 or 16, **characterized in that** the needle strikes (7) of the same pair are substantially simultaneous.

18. Method according to claim 15 or 16, **characterized in that** the needle strikes (7) of the same pair are not simultaneous.

19. Method according to one of claims 15 to 18, **characterized in that** the needle strikes (7) are carried out in a direction substantially perpendicular to the panel (1).

20. Method according to one of claims 15 to 18, **characterized in that** the needle strikes (7) are carried out in a direction inclined in relation to the panel (1).

21. Method according to one of claims 15 to 20, **characterized in that** an arrangement of needles (7) and/or a feed pitch between successive strikes of the needles (7) is used in order to produce a pattern of recesses (6) receiving bonding material (22).

22. Method according to one of claims 15 to 21, **characterized in that** after needlepunching the web (3) is placed between two fibrous layers (21), in particular in a mould, and the layers (21) are impregnated with bonding material (22).

23. Method according to claim 22, **characterized in that** bridges of bonding material (22) are formed between the two layers (21), linking the two layers (21).

## Patentansprüche

1. Verbundplatte (1) mit zwei Faserschichten (21) und einem Kern (3), der in den Zwischenraum zwischen den Schichten (21) eingesetzt und über ein verfestigtes Bindematerial (22) mit diesen verbunden ist, **dadurch gekennzeichnet, dass** in den Kern (3) punktförmige Aussparungen (6) von zumindest einer seiner Seiten (31; 32) eingebracht sind und ausschließlich Bindematerial (22) aufnehmen.

2. Platte nach Anspruch 1, **dadurch gekennzeichnet, dass** das Bindematerial (22) die Schichten (21) durchtränkt und zumindest in einen Teil der Aussparungen (6) eingespritzt wird und/oder darin einzieht.

3. Platte nach Anspruch 1 oder 2, **dadurch gekennzeichnet, dass** zumindest ein Teil der Aussparungen (6), die Bindematerial (22) aufnehmen, in zumindest einem Bestandteil des Kerns (3) ausgebildet ist, insbesondere durch Nadelung, Perforierung oder Durchstanzen, so dass jede Aussparung (6) ein Profil, das entlang einer Achse (63) verläuft, und eine Penetrationslänge (L) aufweist.

4. Platte nach einem der Ansprüche 1 bis 3, **dadurch gekennzeichnet, dass** das verfestigte Bindematerial (22) Brücken bildet, welche die beiden Schichten (21) miteinander verbindet.

5. Platte nach einem der Ansprüche 1 bis 4, **dadurch gekennzeichnet, dass** zumindest ein Teil der Aussparungen, erste Aussparungen (61) genannt, die von einer Seite (31) des Kerns (3) darin eingebracht sind, paarweise entsprechenden Aussparungen, zweite Aussparungen (62) genannt, zugeordnet sind, die von der anderen Seite (32) des Kerns (3) eingebracht sind, so dass die Aussparungen eines gleichen Paares im wesentlichen parallel verlaufen und einen Achsabstand von 0 bis 0,7 mm haben.

6. Platte nach Anspruch 5, **dadurch gekennzeichnet, dass** die Summe der Penetrationslängen (L) der Aussparungen (6) eines gleichen Paares größer ist als die lokale Dicke des Kerns (3), wobei jede der Penetrationslängen der ersten (61) und der zweiten (62) Aussparungen eines gleichen Paares kleiner als die lokale Dicke des Kerns (3) ist.

7. Platte nach einem der Ansprüche 4 bis 6, **dadurch gekennzeichnet, dass** zumindest ein Teil der Aussparungen (6) zumindest eine Penetrationsachse (63) aufweist, die im wesentlichen senkrecht zur Platte (1) verläuft.

8. Platte nach einem der Ansprüche 4 bis 6, **dadurch gekennzeichnet, dass** zumindest ein Teil der Aussparungen eine Penetrationsachse aufweist, die gegenüber der Platte (1) geneigt verläuft.

9. Platte nach einem der Ansprüche 1 bis 6, **dadurch gekennzeichnet, dass** die Aussparungen (6) einen Durchmesser von zwischen 0,5 mm und 2,67 mm haben.

10. Platte nach einem der Ansprüche 1 bis 9, **dadurch gekennzeichnet, dass** die Aussparungen (6), welche das verfestigte Bindematerial (7) aufnehmen, entlang geometrischer Muster liegen, wie etwa Reihen, Karos, Anordnungen auf Lücke.

11. Platte nach einem der Ansprüche 1 bis 10, **dadurch gekennzeichnet, dass** zumindest eine der Seiten (31; 32) des Kerns (3) uneben ausgebildet ist.

12. Platte nach einem der Ansprüche 1 bis 11, **dadurch gekennzeichnet, dass** sie zumindest zwei übereinanderliegende Grundkerne aufweist, insbesondere unter Zwischenlage einer Innenschicht.

13. Vorrichtung zum Herstellen einer Platte nach einem der Ansprüche 1 bis 12, **dadurch gekennzeichnet, dass** sie enthält:
- Fördermittel (110) zum Befördern eines Kerns (3), der zumindest ein vorgeformtes Element (4) aufweist, bis zu einer Nadelungseinheit (120),
- zumindest eine Nadelungseinheit (120) zum Ausbilden der Aussparungen (6) am Kern (3) von zumindest einer seiner Seiten (31; 32), und zwar vor dem Bedecken der Außenseiten des Kerns (3) mit Faserschichten.

14. Verfahren zum Ausbilden einer Verbundplatte nach einem der Ansprüche 1 bis 12, **dadurch gekennzeichnet, dass** im Kern (3) direkt von zumindest einer seiner Seiten (31; 32) Aussparungen (6) durch Nadelung ausgebildet werden.

15. Verfahren nach Anspruch 14, **dadurch gekennzeichnet, dass** erste Aussparungen (61) von einer Seite (31) des Kerns (3) und zweite Aussparungen (62) von der anderen Seite (32) des Kerns (3) ausgebildet werden, wobei die ersten (61) und die zweiten (62) Aussparungen Profile haben, die sich entlang im wesentlichen parallel verlaufender Achsen erstrecken und dabei paarweise zugeordnet sind, so dass die Aussparungen (6) eines gleichen Paares einen Achsabstand von 0 bis 0,7 mm haben.

16. Verfahren nach Anspruch 15, **dadurch gekennzeichnet, dass** die Aussparungen (6) eines gleichen Paares durch Schläge von Nadeln (7) eines entsprechenden Paares ausgebildet werden, deren Penetration in den Kern (3) derart ist, dass die Summe der Penetrationslängen (L) der Nadeln (7) eines gleichen Paares größer ist als die Dicke des Kerns (3), wobei jede der Penetrationslängen (L) der Nadeln (7) eines gleichen Paares kleiner ist als die lokale Dicke des Kerns (3).

17. Verfahren nach Anspruch 15 oder 16, **dadurch gekennzeichnet, dass** die Nadelschläge der Nadeln (7) eines gleichen Paares im wesentlichen gleichzeitig erfolgen.

18. Verfahren nach Anspruch 15 oder 16, **dadurch gekennzeichnet, dass** die Nadelschläge der Nadeln (7) eines gleichen Paares nicht gleichzeitig erfolgen.

19. Verfahren nach einem der Ansprüche 15 bis 18, **dadurch gekennzeichnet, dass** die Nadelschläge der Nadeln (7) in einer Richtung im wesentlichen senkrecht zur Platte (1) erfolgen.

20. Verfahren nach einem der Ansprüche 15 bis 19, **dadurch gekennzeichnet, dass** die Nadelschläge der Nadeln (7) in einer Richtung erfolgen, die gegenüber der Platte (1) geneigt ist.

21. Verfahren nach einem der Ansprüche 15 bis 20, **dadurch gekennzeichnet, dass** eine Anordnung von Nadeln (7) und/oder ein Vorrückschritt zwischen aufeinanderfolgenden Schlägen von Nadeln (7) Anwendung finden, derart, dass ein Muster von Aussparungen (6) entsteht, welches das Bindematerial (22) aufnimmt.

22. Verfahren nach einem der Ansprüche 15 bis 21, **dadurch gekennzeichnet, dass** nach der Nadelung der Kern (3) zwischen zwei Faserschichten (21) eingelegt wird, insbesondere in einer Gießform, und die Schichten (21) mit Bindematerial (22) durchtränkt werden.

23. Verfahren nach Anspruch 22, **dadurch gekennzeichnet, dass** zwischen den beiden Schichten (21) Brücken aus Bindematerial (22) gebildet werden, welche die beiden Schichten (21) verbinden.
